# FASCICULE DE BREVET EUROPEEN

(11) **EP 2 225 156 B1**
(45) Date de publication et mention de la délivrance du brevet: **15.05.2013**
(21) Numéro de dépôt: 08866581.5
(22) Date de dépôt: 22.12.2008
(51) Int. Cl.: B64D 33/02, F02C 7/047, F02C 9/18

(54) **ENSEMBLE PROPULSIF D'AERONEF COMPRENANT DES SYSTEMES DE PRELEVEMENT D'AIR CHAUD**
FLUGZEUGANTRIEBSANORDUNG MIT HEISSLUFTZAPFLUFTSYSTEM
AIRCRAFT PROPULSION ASSEMBLY COMPRISING HOT AIR BLEED SYSTEMS

(30) Priorité: 28.12.2007 FR 0760439
(43) Date de publication de la demande: 08.09.2010
(73) Titulaire: Airbus Opérations SAS, 31060 Toulouse (FR)
(72) Inventeur: PORTE, Alain, F-31770 Colomiers (FR)
(74) Mandataire: Fantin, Laurent
(86) Numéro de dépôt international: PCT/FR2008/052398
(87) Numéro de publication internationale: WO 2009/083691

(56) Documents cités:
- EP-A- 1 232 944
- DE-A1- 3 333 437
- FR-A- 2 875 542

## Description

La présente invention se rapporte à un ensemble propulsif comprenant des systèmes de prélèvement d'air chaud visant à réduire l'émission sonore de ladite motorisation.

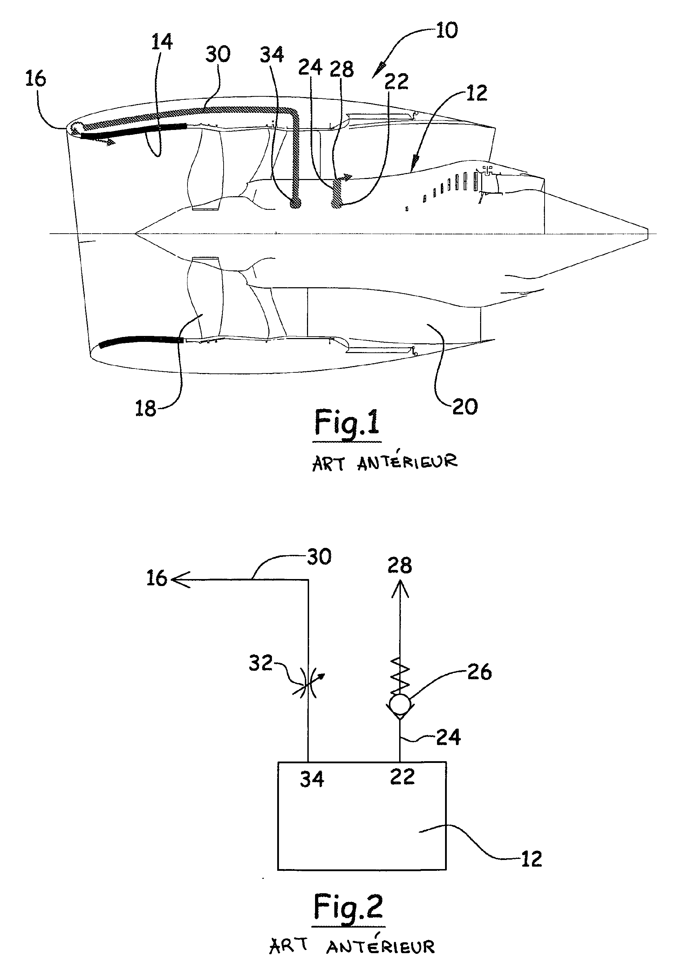

Sur les figures 1 et 2, on a représenté un ensemble propulsif d'un aéronef comprenant une nacelle 10 dans laquelle est disposée de manière sensiblement concentrique une motorisation 12 reliée par l'intermédiaire d'un mât au reste de l'aéronef.

La nacelle 10 comprend une paroi intérieure délimitant un conduit 14 avec une entrée d'air 16 à l'avant, une première partie du flux d'air entrant, appelée flux primaire, traversant la motorisation 12 pour participer à la combustion, la seconde partie du flux d'air, appelée flux secondaire, étant entrainée par une soufflante 18 et s'écoulant dans un conduit annulaire 20 délimité par la paroi intérieure de la nacelle et la paroi extérieure de la motorisation.

La motorisation 12 comprend un système de décharge, par exemple pour éviter des phénomènes de « pompage » de la motorisation au décollage, ledit système permettant de prélever de l'air au niveau d'un premier point de prélèvement 22 dans la chambre de combustion et de l'éjecter à l'extérieur de la motorisation 12. A cet effet, la motorisation comprend un conduit 24 muni d'une soupape 26 pour acheminer l'air dans certaines conditions depuis le premier point de prélèvement 22 vers la zone de refoulement, à l'extérieur de la motorisation via un orifice 28 débouchant dans le conduit annulaire 20, notamment via une pluralité d'orifices ménagés dans la tuyère. Ce système est appelé un « pepper pot ».

Cette éjection dans le conduit annulaire 20 a pour inconvénient majeur d'émettre du bruit.

En parallèle, l'ensemble propulsif peut comprendre un système de traitement du givre de type pneumatique visant à prélever de l'air chaud au niveau de la motorisation et à le refouler au niveau de l'entrée d'air 16. Un tel système est notamment décrit dans le document EP-1.232.944.

Ce système de traitement du givre comprend au moins un conduit 30 muni éventuellement de moyens de régulation du débit 32 pour acheminer de l'air chaud depuis un second point de prélèvement 34 dans la motorisation vers l'entrée d'air. Après avoir circulé au niveau de l'entrée d'air pour obtenir le dégivrage, l'air chaud est rejeté dans la veine d'air entrant dans le conduit 14 de la nacelle, Le refoulement de l'air chaud utilisé pour le dégivrage de l'entrée d'air ne génère pas de nuisances sonores.

On connait d'après le document DE-33.33.437 une motorisation comprenant une régulation du débit au niveau de l'étage d'un compresseur avec une fente de soufflage pour alimenter une chambre d'air dont la sortie est reliée via une vanne au bord d'attaque de l'entrée de la motorisation. En variante, une vanne à clapet peut être prévue pour relier l'étage du compresseur à la chambre d'air qui alimente en continue le bord d'attaque de l'entrée de la motorisation. Ce type de dispositif ne répond pas aux besoins de l'invention car si on assimile la fente de soufflage à un système de décharge, le traitement du givre ne peut être réalisé que lorsque le système de décharge est actif selon ce document. Or, les besoins en traitement du givre ne sont pas nécessairement concomitants avec une décharge.

La présente invention vise à proposer un ensemble propulsif d'aéronef comportant des systèmes de prélèvement d'air chaud dans la motorisation visant à réduire l'émission sonore de ladite motorisation, notamment celle découlant du système de décharge et assurant un fonctionnement optimal du traitement du givre et du système de décharge.

A cet effet, l'invention a pour objet un ensemble propulsif d'aéronef comprenant une nacelle dans laquelle est disposée une motorisation, ladite nacelle comprenant une paroi intérieure délimitant un conduit avec une entrée d'air à l'avant, l'ensemble propulsif comprenant d'une part un système de traitement du givre comportant au moins un premier conduit muni de moyens de régulation de l'air passant, pour acheminer de l'air chaud depuis la motorisation vers l'entrée d'air, et d'autre part, un système de décharge comportant au moins un second conduit muni de moyens de régulation de l'air passant, pour acheminer de l'air depuis la motorisation vers une zone de refoulement, ledit au moins un second conduit étant relié audit au moins un premier conduit, caractérisé en ce que les moyens de régulation de l'air passant dans ledit au moins un premier conduit sont distincts des moyens de régulation de l'air passant dans ledit au moins un second conduit et disposés selon un montage en parallèle.

D'autres caractéristiques et avantages ressortiront de la description qui va suivre de l'invention, description donnée à titre d'exemple uniquement, en regard des dessins annexés sur lesquels :
- la figure 1 est une coupe illustrant de manière schématique un ensemble propulsif selon l'art antérieur,
- la figure 2 est un schéma illustrant les systèmes de prélèvement selon l'art antérieur,
- la figure 3 est une coupe illustrant de manière schématique un ensemble propulsif selon l'invention, et
- la figure 4 est un schéma illustrant les systèmes de prélèvement selon l'invention.

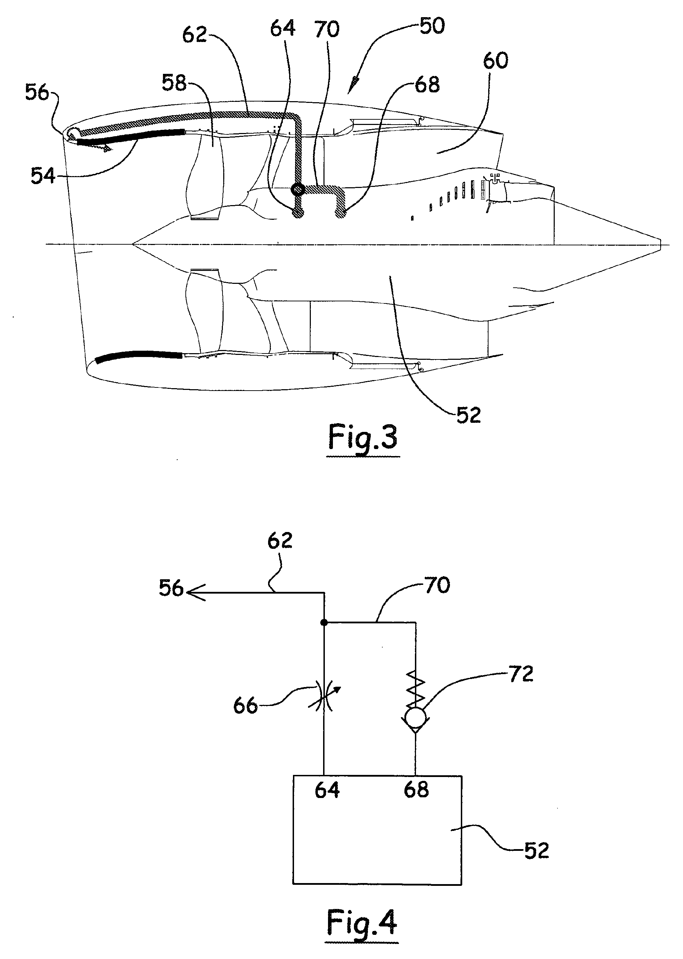

Sur la figure 3, on a représenté un ensemble propulsif d'un aéronef comprenant une nacelle 50 dans laquelle est disposée de manière sensiblement concentrique une motorisation 52 reliée par l'intermédiaire d'un mât au reste de l'aéronef.

La nacelle 50 comprend une paroi intérieure délimitant un conduit 54 avec une entrée d'air 56 à l'avant appelée également lèvre, une première partie du flux d'air entrant, appelée f lux primaire, traversant la motorisation 52 pour participer à la combustion, la seconde partie du flux d'air, appelée flux secondaire, étant entrainée par une soufflante 58 et s'écoulant dans un conduit annulaire 60 délimité par la paroi intérieure de la nacelle et la paroi extérieure de la motorisation.

L'ensemble propulsif comprend un système de traitement du givre de type pneumatique visant à prélever de l'air chaud au niveau de la motorisation et à le refouler au niveau de l'entrée d'air 56.

Ce système de traitement du givre comprend au moins un premier conduit 62 pour acheminer de l'air chaud depuis au moins un premier point de prélèvement 64 dans la motorisation 52 vers l'entrée d'air 56. Ce système comprend avantageusement des premiers moyens 66 de régulation de l'air passant, notamment pour ajuster le débit d'air chaud transmis vers l'entrée d'air. Après avoir circulé au niveau de l'entrée d'air 56 pour obtenir le dégivrage, l'air chaud est rejeté à l'extérieur. Selon le mode de réalisation illustré sur la figure 3, l'air utilisé pour le dégivrage est rejeté dans la veine d'air entrant dans le conduit 54 de la nacelle. Cependant, l'invention n'est pas limitée à cette solution la sortie de l'air pouvant s'effectuer en périphérie de la nacelle.

Le refoulement de l'air utilisé pour le dégivrage de l'entrée d'air ne génère pas de nuisances sonores.

Le système de dégivrage ainsi que la sortie de l'air utilisé pour le dégivrage ne sont pas plus détaillés car ils sont connus de l'homme du métier. Par ailleurs, ils peuvent prendre différentes configurations, notamment celle décrite dans le document EP-1.232.944.

En complément, l'ensemble propulsif comprend un système de décharge, notamment pour éviter des phénomènes de « pompage » de la motorisation au décollage, visant à prélever de l'air au niveau d'un second point de prélèvement 68 dans la chambre de combustion et à l'éjecter vers une zone de refoulement , à l'extérieur de la motorisation 52. A cet effet, la motorisation comprend au moins un second conduit 70 muni de seconds moyens 72 de régulation de l'air passant, telle qu'une soupape, pour prélever l'air depuis le second point de prélèvement 68 vers la zone de refoulement.

Selon l'invention, le second conduit 70 est relié au premier conduit 62 après les seconds moyens 72 de régulation afin de refouler l'air prélevé par le système de décharge dans le premier conduit 62 afin que ledit air soit rejeté de la même manière que l'air utilisé pour le dégivrage.

Les moyens 72 de régulation de l'air vers le second conduit 70 sont différents des moyens 66 de régulation afin d'assurer les deux fonctions à savoir le dégivrage et la décharge de manière optimale.

Cette solution a pour avantage de supprimer les nuisances sonores produites par le système de décharge.

Par ailleurs, cet agencement contribue à améliorer le dégivrage dans la mesure où le débit d'air chaud est plus important.

Selon les variantes, le premier point de prélèvement 64 et le second point de prélèvement 68 peuvent être disposés dans la même zone de la motorisation ou dans des zones différentes.

## Revendications

1. Ensemble propulsif d'aéronef comprenant une nacelle (50) dans laquelle est disposée une motorisation (52), ladite nacelle comprenant une paroi intérieure délimitant un conduit (54) avec une entrée d'air à l'avant (56), l'ensemble propulsif comprenant d'une part un système de traitement du givre comportant au moins un premier conduit (62) muni de moyens (66) de régulation de l'air passant, pour acheminer de l'air chaud depuis la motorisation (52) vers l'entrée d'air (56), et d'autre part, un système de décharge pour éviter des phénomènes de « pompage » de la motorisation au décollage comportant au moins un second conduit (70) muni de moyens (72) de régulation de l'air passant, pour acheminer de l'air depuis la motorisation vers une zone de refoulement, ledit au moins un second conduit (70) étant relié audit au moins un premier conduit (62), **caractérisé en ce que** les moyens (66) de régulation de l'air passant dans ledit au moins un premier conduit (62) étant distincts des moyens (72) de régulation de l'air passant dans ledit au moins un second conduit (70) et disposés selon un montage en parallèle.

2. Ensemble propulsif d'aéronef selon la revendication 1, **caractérisé en ce que** ledit au moins un second conduit (70) est relié audit au moins un premier conduit (62) après lesdits moyens (66, 72) de régulation de l'air passant dans ledit au moins un premier conduit (62) et dans ledit au moins un second conduit (70).

## Patentansprüche

1. Antriebsanordnung für ein Flugzeug mit einer Gondel (50), in der eine Motorisierung (52) angeordnet ist, wobei die Gondel eine Innenwand aufweist, die eine Führung (54) mit einem vorderen Lufteintritt (56) aufweist und wobei die Antriebsanordnung einerseits ein Enteisungssystem aufweist, das wenigstens eine erste Leitung (62) umfasst, die mit Mitteln (66) zum Einstellen der hindurchströmenden Luft versehen ist, um Warmluft von der Motorisierung (52) zum Lufteintritt (56) zu führen, und andererseits ein Entlastungssystem, um das Auftreten von "Pumpen" der Motorisierung beim Start zu vermeiden, das wenigstens eine zweite Leitung (70) aufweist, die mit Mitteln (72) zum Einstellen der hindurchströmenden Luft versehen ist, um Luft von der Motorisierung zu einem Förderbereich zu leiten, wobei die wenigstens zweite Leitung (70) mit der wenigstens ersten Leitung (62) verbunden ist, **dadurch gekennzeichnet, dass** sich die Mittel (66) zum Einstellen der durch die wenigstens erste Leitung (62) hindurchströmenden Luft von den Mitteln (72) zum Einstellen der durch die wenigstens zweite Leitung (70) hindurchströmenden Luft unterscheiden und in Parallelschaltung angeordnet sind.

2. Antriebsanordnung für ein Flugzeug nach Anspruch 1, **dadurch gekennzeichnet, dass** die wenigstens zweite Leitung (70) mit der wenigstens ersten Leitung (62) hinter den Mitteln (66, 72) zum Einstellen der durch die wenigstens erste Leitung (62) und durch die wenigstens zweite Leitung (70) hindurchströmenden Luft verbunden sind.

## Claims

1. Aircraft propulsion unit that comprises a nacelle (50) in which a power plant (52) is arranged, whereby said nacelle comprises an inside wall that delimits a pipe (54) with an air intake at the front (56), whereby the propulsion unit comprises, on the one hand, a frost treatment system that comprises at least one first pipe (62) that is equipped with means (66) for regulating the passing air, for directing the hot air from the power plant (52) to the air intake (56), and, on the other hand, an exhaust system for preventing "pumping" phenomena of the power plant at takeoff that comprises at least one second pipe (70) that is equipped with means (72) for regulating the passing air, for directing air from the power plant to a delivery zone, said at least one second pipe (70) being connected to said at least one first pipe (62), **characterized in that** the means (66) for regulating the air that passes into said at least one first pipe (62) are separate from the means (72) for regulating the air that passes into said at least one second pipe (70) and arranged in a parallel arrangement.

2. Aircraft propulsion unit according to claim 1, wherein said at least one second pipe (70) is connected to said at least one first pipe (62) downstream from said means (66, 72) for regulating the air that passes into said at least one first pipe (62) and into said at least one second pipe (70).
